# EUROPEAN PATENT SPECIFICATION

(11) **EP 2 199 503 B1**
(45) Date of publication and mention of the grant of the patent: **24.02.2016**
(21) Application number: 09178319.1
(22) Date of filing: 08.12.2009
(51) Int. Cl.: G07C 9/00, B60R 25/00

(54) **Vehicle door locking system, keyless entry system, and locking control method**
Fahrzeugtürschlosssystem, schlüsselloses Zutrittssystem und Schließsteuerungsverfahren
Système de verrouillage de porte de véhicule, système d'entrée sans clé et procédé de contrôle du verrouillage

(30) Priority: 09.12.2008 JP 2008313242
(43) Date of publication of application: 23.06.2010
(73) Proprietor: TOYOTA JIDOSHA KABUSHIKI KAISHA, Toyota-shi, Aichi-ken, 471-8571 (JP)
(72) Inventor: Kamiya, Masachika, Toyota-shi Aichi 471-8571 (JP); Iwamoto, Koji, Toyota-shi Aichi 471-8571 (JP)
(74) Representative: TBK

(56) References cited:
- EP-A1- 1 900 578
- EP-A2- 1 184 236
- FR-A1- 2 816 346
- US-A1- 2004 142 732
- US-A1- 2007 024 121

## Description

### BACKGROUND OF THE INVENTION

### 1. Field of the Invention

The invention relates to a vehicle door locking system that locks and unlocks the vehicle doors based on radio communication with an electronic key, and more particularly, to a vehicle door locking system, a keyless entry system, and a locking control method that includes an automatic locking function.

### 2. Description of the Related Art

For example, Japanese Patent Application Publication No. 61-274064 (JP-A-61-274064) describes a vehicle equipped with a door locking system that includes an automatic door locking function that automatically locks the vehicle doors when an occupant has forgotten to lock the doors after leaving the vehicle. In the door locking system described in JP-A-61-274064, the doors are locked unless the opening of any of the doors is detected within a predetermined time after the doors have been unlocked.

In order to lock the doors through the automatic locking function, a closed state of the doors is presupposed. Therefore, the door locking system detects the opening/closing of each door by means of, for example, a courtesy switch.

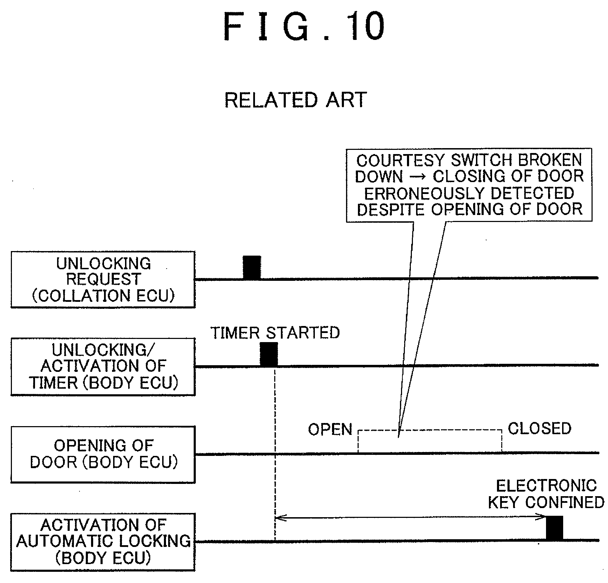

FIG. 10 is an exemplary diagram illustrating in a time-series manner the automatic door locking procedure according to the related art as described above. When the doors are unlocked from outside a vehicle with a keyless entry key or a wireless key, a timer is started after the doors are closed. After that, the counting of the timer continues while the door locking system monitors whether any of the doors is opened. After the lapse of, for example, 30 seconds, the automatic locking function locks the doors. According to the automatic locking function, even if a passenger leaves the vehicle without locking the doors after having unlocked them, the doors are automatically locked. Therefore, it is possible to ensure security.

In the described automatic locking procedure, however, if the courtesy switch is broken, the doors may be automatically locked in situations where the doors should not be locked. That is, if the courtesy switch is broken, it may be erroneously detected, despite the opening of a certain one of the doors, that this door remains closed. Therefore, even if a passenger opens the door (as indicated by dotted lines in FIG. 10) after the timer has started, the doors may be locked because the opening of the door is not detected.

When the doors are locked after the passenger opens one of the doors, and an electronic key is left in the vehicle interior, the electronic key may be inadvertently locked in the interior of the vehicle. For example, when the passenger returns to a driver seat after laying a bag containing the electronic key in a rear seat or a hatchback luggage compartment and closing the door, the doors are automatically locked. As a result, the electronic key is locked inside the vehicle.
Document US 2004/142732 A1 discloses an automatic locking/unlocking device which locks an opening/closing body when a normal response signal is received in response to a request signal sent to a predetermined zone around a vehicle body, comprising detector for detecting that the opening/closing body is closed, wherein the request signal is sent within the vehicle compartment in response to closing of the opening/closing body before the request signal is sent to the predetermined zone around the vehicle body and if the normal response signal is received in response to this request signal, transmission of the request signal to the predetermined zone around the vehicle body is prohibited, thereby suppressing consumption of power in the portable unit and ensuring a secure automatic locking.

### SUMMARY OF THE INVENTION

The invention provides a vehicle door locking system as defined in claim 1, a keyless entry system as defined in claim 10, and a locking control method as defined in claim 12 and 13, that allow an automatic locking function to be appropriately activated even when a courtesy switch is broken.

A vehicle door locking system according to a first aspect of the invention has opening/closing detection means for detecting opening/closing of any vehicle door; communication means for communicating with an electronic key equipped with a radio communication unit; authentication means for authenticating the electronic key; unlocking means for unlocking the doors when the electronic key is authenticated; and door locking means for locking the vehicle doors if the opening of any vehicle door is not detected within a first predetermined time after the doors have been unlocked by the unlocking means. The vehicle door locking system includes electronic key detection means for sending a request signal to an interior of the vehicle to request the electronic key to communicate with the communication means when the first predetermined time has elapsed and the opening/closing detection means has not detected the opening of any of the doors, and determining the electronic key is in the vehicle interior if a response from the electronic key is received; locking the doors by the door locking means is not performed if the electronic key detection means determines that the electronic key is in the vehicle interior.

Further, in the vehicle door locking system according to the foregoing first aspect of the invention, if an ID code signal from the electronic key is received after the communication means sends a request signal to request the electronic key to send an ID code signal, the authentication means may authenticate the electronic key through the ID code signal from the electronic key, and the electronic key detection means may send a request signal through the communication means to the vehicle interior to request the electronic key to send the ID code signal after the first predetermined time has elapsed and the opening/closing detection means has not detected the opening of any of the doors, and may determine that the electronic key is in the vehicle interior if the ID code signal from the electronic key is received.

Further, in the vehicle door locking system according to the foregoing first aspect of the invention, the opening/closing detection means may detect the opening/closing of the doors individually..

Further, in the vehicle door locking system according to the foregoing first aspect of the invention may further include switch malfunction detection means for detecting a malfunction in the opening/closing detection means and recording information specifying the malfunction opening/closing detection means when the electronic key detection means determines that the electronic key is in the vehicle interior.

Further, in the vehicle door locking system according to the foregoing first aspect of the invention, the switch malfunction detection means may record the malfunction of the opening/closing detection means as a temporary malfunction that is automatically resolved over time.

Further, the vehicle door locking system according to the foregoing first aspect of the invention may further include a first electronic control unit that controls locking/unlocking of the doors; and a second electronic control unit that controls authentication of the electronic key and that is formed separately from the first electronic control unit, wherein the electronic key detection means, which belongs to the second electronic control unit, sends a request signal requesting the electronic key to communicate with the communication means when a second predetermined time stored in advance, which is shorter than the first predetermined time, has elapsed and the opening/closing detection means does not detect the opening of any of the doors, and the electronic key detection means sends a request signal to request the first electronic control unit to recount the first predetermined time and recounts the second predetermined time if the electronic key detection means determines that the electronic key is in the vehicle interior.

Further, in the vehicle door locking system according to the foregoing first aspect of the invention, locking the doors by the door locking means (32, 15) may be performed if a predetermined time has elapsed after the electric key detection means (35, 38) determines that the electric key (30) is in the vehicle interior and locking the doors by the door locking means (32, 15) is not performed.

Further, the vehicle door locking system according to the foregoing first aspect of the invention may further include warning means for issuing a warning to an outside of the vehicle if the electronic key detection means determines that the electronic key is in the vehicle interior.

Further, in the vehicle door locking system according to the foregoing first aspect of the invention, the warning means may repeatedly issues warnings to the outside of the vehicle and reduces an interval between successive warnings.

A keyless entry system according to a second aspect of the invention has a vehicle door locking system, that includes opening/closing detection means for detecting opening/closing of any vehicle door; communication means for sending a request signal to request an electronic key equipped with a radio communication unit to send a stored ID code signal and receiving the ID code signal sent from the electronic key; authentication means for authenticating the electronic key through the ID code signal; unlocking means for unlocking the doors when the electronic key is authenticated; and door locking means for locking the vehicle doors if the opening of any vehicle door is not detected within a first predetermined time after the doors have been unlocked by the unlocking means, and the electronic key, which sends the stored ID code signal when a request signal to request to send the ID code signal is received. The keyless entry system includes electronic key detection means for sending a request signal through the communication means to an interior of the vehicle to request the electronic key to send the ID code signal when the first predetermined time has elapsed and the opening/closing detection means has not detected the opening of any of the doors, and determining that the electronic key is in the vehicle interior if the ID code signal from the electronic key is received; wherein locking the doors by the door locking means is not performed if the electronic key detection means determines that the electronic key is in the vehicle interior.

Further, in the vehicle door locking system according to the foregoing second aspect of the invention, the opening/closing detection means may detect the opening/closing of the doors individually.

A locking control method for a vehicle door locking system according to a third aspect of the invention has opening/closing detection means for detecting opening/closing of any vehicle door; communication means for sending a request signal to request an electronic key equipped with a radio communication unit to send a stored ID code signal and receiving the ID code signal sent from the electronic key; authentication means for authenticating the electronic key through the ID code signal; unlocking means for unlocking the doors when the electronic key is authenticated; and door locking means for locking the vehicle doors if the opening of any vehicle door is not detected within a first predetermined time after the doors have been unlocked by the unlocking means. The locking control method includes: sending a request signal to an interior of the vehicle to request the electronic key to send the ID code signal if opening of any of the doors is not detected within the first predetermined time; determining that the electronic key is in the vehicle interior if the ID code signal from the electronic key is received; and keeping the doors unlocked, even if opening of any of the doors is not detected within the first predetermined time, if it is determined that the electronic key is in the vehicle interior.

A locking control method for a keyless entry system according to a fourth aspect of the invention has a vehicle door locking system, that includes opening/closing detection means for detecting opening/closing of any vehicle door; communication means for sending a request signal to request an electronic key equipped with a radio communication unit to send a stored ID code signal and receiving the ID code signal sent from the electronic key; authentication means for authenticating the electronic key through the ID code signal; unlocking means for unlocking the doors when the electronic key is authenticated; and door locking means for locking the vehicle doors if the opening of any vehicle door is not detected within a first predetermined time after the doors have been unlocked by the unlocking means, and the electronic key, which sends the stored ID code signal when a request signal to request to send the ID code signal is received. The locking control method includes: sending a request signal to an interior of the vehicle to request the electronic key to send the ID code signal if opening of any of the doors is not detected within the first predetermined time; sending the stored ID code signal from the electronic key in response to a request signal to request to send the ID code signal; determining that the electronic key is in the vehicle interior if the ID code signal from the electronic key is received; and keeping the doors unlocked, even if opening of any of the doors is not detected within the first predetermined time, if it is determined that the electronic key is in the vehicle interior.

According to the invention, it is possible to provide a vehicle door locking system, a keyless entry system, and a locking control method that allow an automatic locking function to be appropriately activated even when a courtesy switch is broken.

### BRIEF DESCRIPTION OF THE DRAWINGS

The foregoing and/or further features and advantages of the invention will become more apparent from the following description of example embodiments with reference to the accompanying drawings, in which like numerals are used to represent like elements and wherein:
FIG 1 is a diagram illustrating in a time-series manner the automatic door locking process executed by a door locking system according to the first embodiment of the invention;
FIG. 2 is a diagram showing an area of detection of an electronic key by the door locking system according to the first embodiment of the invention;
FIG. 3 is a diagram of a hardware configuration of the door locking system according to the first embodiment of the invention;
FIG. 4 is a functional block diagram of the door locking system according to the first embodiment of the invention;
FIG. 5A is a schematic diagram of a courtesy switch when the door is closed in the first embodiment of the invention;
FIG. 5B is a schematic diagram of the courtesy switch when the door is open in the first embodiment of the invention;
FIG. 6 is a flowchart showing the automatic door locking process executed by the door locking system according to the first embodiment of the invention;
FIG. 7 is a diagram illustrating in a time-series manner an automatic door locking process executed by a door locking system according to the second embodiment of the invention;
FIG. 8 is a functional block diagram of the door locking system according to the second embodiment of the invention;
FIG. 9 is a flowchart showing the automatic door locking process executed by the door locking system according to the second embodiment of the invention; and
FIG 10 is an exemplary diagram illustrating in a time-series manner the automatic door locking process according to the related art.

### DETAILED DESCRIPTION OF EMBODIMENTS

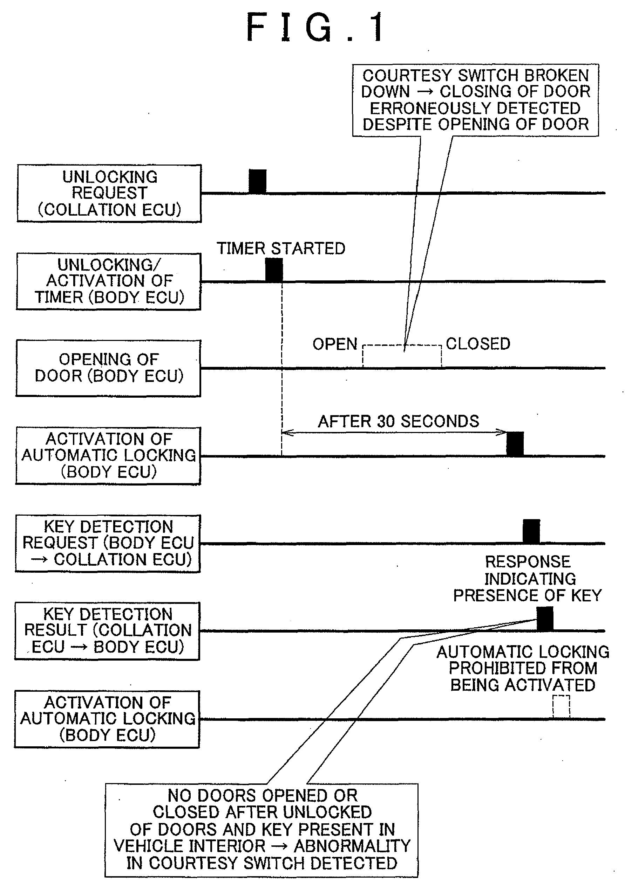

FIG 1 is a diagram illustrating in a time-series manner the automatic door locking process executed by a door locking system 100 according to the first embodiment of the invention. When an unlocking request of a wireless key, a smart key (registered trademark), or a keyless entry key (hereinafter referred to as an electronic key) is received from outside a vehicle, the door locking system unlocks the doors, and a timer is started. After that, the counting of the timer is continued while monitoring whether opening of any of the doors has been detected. If a user opens any one of the doors as indicated by dotted lines before the predetermined time has elapsed (hereinafter referred to as "locking standby time"), the opening of the door is detected by a courtesy switch. When the opening of the door is detected by the courtesy switch, a driver or passenger (hereinafter referred to as the driver) who has opened the door is considered to understand that the doors are unlocked. Therefore, the door locking system does not automatically lock the doors. If the opening of the door is not detected by the courtesy switch before the locking standby time has elapsed, the door locking system sends a request signal to the vehicle interior and determines from the presence or absence of a response to the request signal whether the electronic key is in the vehicle interior. If there is no response from the electronic key from the vehicle interior, the door locking system then automatically locks the doors. If a response from the electronic key comes from the vehicle interior, the door locking system then prohibits the doors from being automatically locked to avoid locking the electronic key in the car.

If the opening of the door is not detected by the courtesy switch, the electronic key in the vehicle interior is detected and automatic locking of the doors is prohibited. Therefore, even if the courtesy switch is broken, it is possible to avoid locking the electronic key in the car.

The locking procedure according to the first embodiment of the invention is applicable to any door locking system endowed with an automatic locking function and employing an electronic key mounted with a radio communication unit. A condition for activating an automatic locking function (a condition for automatically locking the doors) is not necessarily common to all vehicles, but is often set such that the automatic locking function is activated when the doors are unlocked through the use of radio communication that makes it difficult for the user to confirm that the doors have been unlocked. Unlocking the doors through the use of radio communication will be described below as the condition for activation. However, the locking procedure may also be applied to a case where the doors are unlocked by a mechanical key.

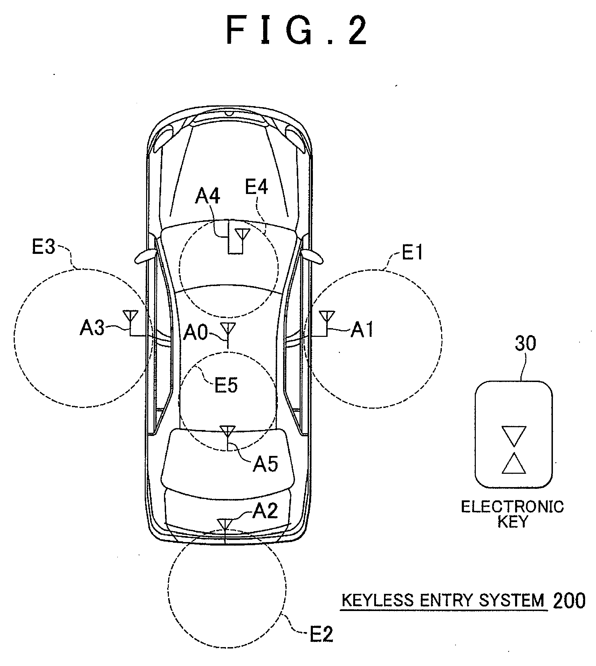

FIG. 2 is a diagram showing areas of detection of an electronic key 30 by the door locking system 100 according to the first embodiment of the invention. When the doors are locked, the door locking system 100 forms detection areas E1 to E3 of the electronic key 30 outside the vehicle. When the electronic key 30 enters each of the detection areas E1 to E3, all the doors or that door that corresponds to each of the detection areas E1 to E3 is unlocked. For example, when the driver touches a door knob or the like, the touch is detected and at least the touched door is unlocked (hereinafter, no distinction will be made in some cases between a state where the doors can be unlocked and a state where the doors are unlocked). Further, the electronic key 30 has operation buttons. When the driver operates a predetermined button even from a location distant from the detection areas E1 to E3, all the doors are unlocked (wireless unlocking). The automatic locking function according to this embodiment of the invention is activated once the doors are unlocked in accordance with one of these two methods.

When the driver opens for example, the driver seat door, the door locking system 100 forms detection areas E4 and E5. When the electronic key 30 in the detection area E4 is collated, an engine or a main system (in the case of a hybrid vehicle or an electric vehicle) is allowed to be activated. To prevent the electronic key 30 from being locked in the door locking system 100 according to the first embodiment of the invention utilizes these detection areas E4 and E5 to determine whether to automatically lock the doors.

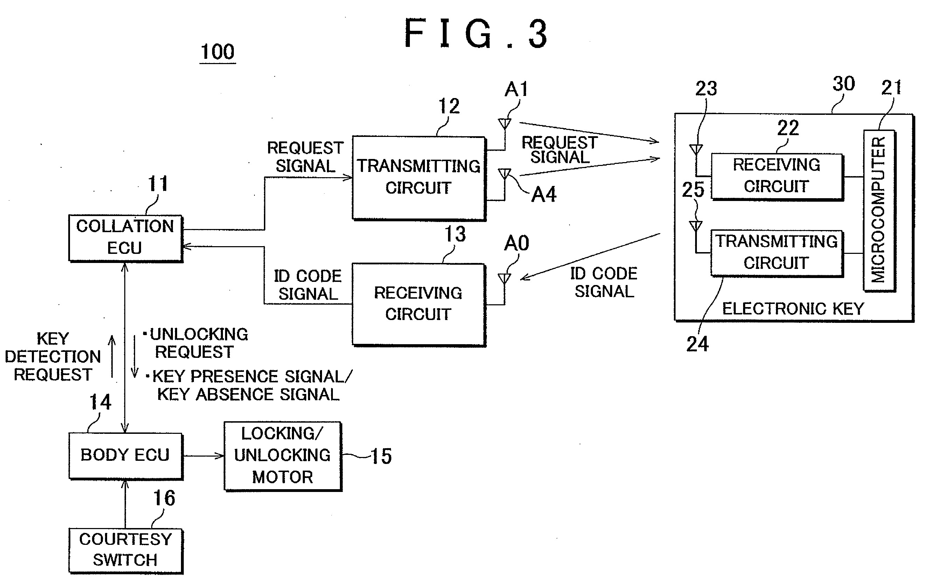

FIG. 3 is a diagram of a hardware configuration of the door locking system 100 according to the first embodiment of the invention. In the door locking system 100 according to the first embodiment of the invention, a collation electronic control unit (ECU) 11, which authenticates the electronic key 30 based on an identification code (ID code) of the electronic key 30 and a body ECU 14, which detects a signal from a courtesy switch 16 and controls the locking/unlocking of the doors, communicate with each other to implement the locking method. It should be noted that the collation ECU 11 and the body ECU 14 communicate with each other via an on-vehicle LAN such as a controller area network (CAN), a FlexRay, or the like.

Each of the collation ECU 11 and the body ECU 14 may be implemented as a computer equipped with a CPU, a RAM, a ROM, a non-volatile memory, a CAN communication portion, an input/output interface, an application specific integrated circuit (ASIC), and the like.

A transmitting circuit 12 and a receiving circuit 13 are connected to the collation ECU 11. The transmitting circuit 12 is common to the detection areas E1 to E5. In FIG 3, only an antenna A1 forming the detection area E1 and an antenna A4 forming the detection area E4 are shown. In a state where the doors are locked, the collation ECU 11 sends a request signal to the transmitting circuit 12, and the transmitting circuit 12 modulates and amplifies carrier waves through the request signal and intermittently sends request electric waves from the antennae A1 to A3 (hereinafter, no distinction will be made between a signal and electric waves, and electric waves for carrying a request signal will be referred to as the request signal). The detection areas E1 to E3 constitute a range of access of the request signal.

The receiving circuit 13 is connected to an antenna A0 and demodulates the ID code signal sent from the electronic key 30, which is received by the antenna A0, to retrieve an ID code. The ID code is then transferred to the collation ECU 11.

The collation ECU 11 includes a non-volatile memory in which the ID code of the electronic key 30, which is carried by an owner of the vehicle or the like, is stored. The collation ECU 11 collates the stored ID code of the electronic key 30 with the ID code received from the electronic key 30. If the collation is successful, the electronic key 30 is authenticated, and the collation ECU 11 sends an unlock request to the body ECU 14. Accordingly, the collation ECU 11 is equivalent to the authentication means of the invention. The same procedure is carried out to authenticate the electronic key 30 in the detection area E4 as well.

In FIG. 3, the antenna A0 is commonly employed to receive an ID code signal from the electronic key 30 in the detection areas E1 to E3 outside the vehicle and the detection areas E4 and E5 inside the vehicle. Therefore, it is determined, depending on which one of the antennae A1 to A5 has sent a request signal, whether the electronic key 30 is inside the vehicle or outside the vehicle and in which one of the detection areas E1 to E5 the electronic key 30 is. Thus, the collation ECU 11 can selectively form the detection areas A1 to A5. A changeover switch for to change between, for example, the antennae A1 and A4 is provided within the transmitting circuit 12, and the collation ECU 11 controls the changeover switch.

However, the electronic key 30 includes a microcomputer 21, a receiving circuit 22, a transmitting circuit 24, an operation detection unit (not shown) for detecting operation of a button, which are driven by batteries. The receiving circuit 22 receives a request signal sent from the antenna A1 or A4 via an antenna 23. After filtering the request signal, generation of intermediate waves, amplification, and the like, the receiving circuit 22 outputs to the microcomputer 21 the request signal fetched through demodulation.

When the request signal is input to the microcomputer 21, the microcomputer 21 generates an ID code signal corresponding to the ID code of the electronic key 30, and sends the ID code signal to the transmitting circuit 24. The transmitting circuit 24 modulates carrier waves through the ID code signal, and sends ID code electric waves (hereinafter referred to as an ID code signal) to the receiving circuit 13 via the antenna 25. In the even the battery is exhausted, the electronic key 30 is mounted with a mechanical key as a back-up. Alternatively, the electronic key 30 may be equipped with a transponder for an immobilizer, which does not require a battery.

The general procedure of operating the door locking system 100 described above will be described simply. When the doors are locked, the collation ECU 11 changes over the changeover switch to the antennae A1 to A3 side, and intermittently emits request signals from the antennae A1 to A3 to form the detection areas E1 to E3 respectively. When the driver carrying the electronic key 30 enters any of the detection areas E1 to E3, the antenna 23 of the electronic key 30 and the receiving circuit 22 of the electronic key 30 receive a request signal, and the microcomputer 21 is thereby activated. The microcomputer 21 interprets the request signal, generates an ID code signal, and sends the ID code signal from the transmitting circuit 24 and the antenna 25.

The collation ECU 11 collates the ID code signal received from the antenna A0 and the receiving circuit 13 with the ID code stored in the non-volatile memory. Because the request signals are sent from one of the antennae A1 to A3, the collation ECU 11 determines that the electronic key 30 is outside the vehicle, and sends an unlocking request to the body ECU 14.

When the body ECU 14 drives the locking/unlocking motor 15, all the doors are unlocked, and the driver may then open the door of the driver seat and get thereinto. In this case, the courtesy switch 16 in the driver seat detects the opening of the door of the driver seat and outputs information on the opening of the door to the body ECU 14.

When the driver gets into the driver seat and closes the door (or closes the door without getting into the vehicle), the courtesy switch 16 detects the closing of the door and outputs information on the closing of the door to the body ECU 14. Thus, the collation ECU 11 changes over the changeover switch to the antenna A4 side, and intermittently sends a request signal from the antenna A4 instead of intermittently sending it from the antenna A1. As in the case of unlocking, the electronic key 30 carried by the driver sends an ID code signal. Therefore, because the request signal is sent from the antenna A4, the collation ECU 11 determines that the electronic key 30 is in the driver seat, and sends a request signal to request the engine ECU to allow the ignition switch to be turned on. When the driver operates an ignition knob (e.g., engine start button), the engine is started.

The process of locking the doors will be described next. When the courtesy switch 16 detects the closing of all the doors with the ignition switch off and a door locking button for the doors (not shown), which is located outside the vehicle, is turned on, the body ECU 14 sends a door locking signal to the collation ECU 11. The collation ECU 11 sends request signals from the antennae A1 to A3 so that the detection areas E1 to E3 can be formed around the doors respectively. The electronic key 30, which is in one of the detection areas, sends an ID code signal. Therefore, the collation ECU 11 receives this ID code signal and authenticates the electronic key 30. When it is detected through authentication that the electronic key 30 is outside the vehicle, the collation ECU 11 sends a request signal to request the body ECU 14 to lock the doors. The body ECU 14 drives the locking/unlocking motor 15 to lock the doors. After the doors are locked, the detection areas E1 to E3 are formed as described above.

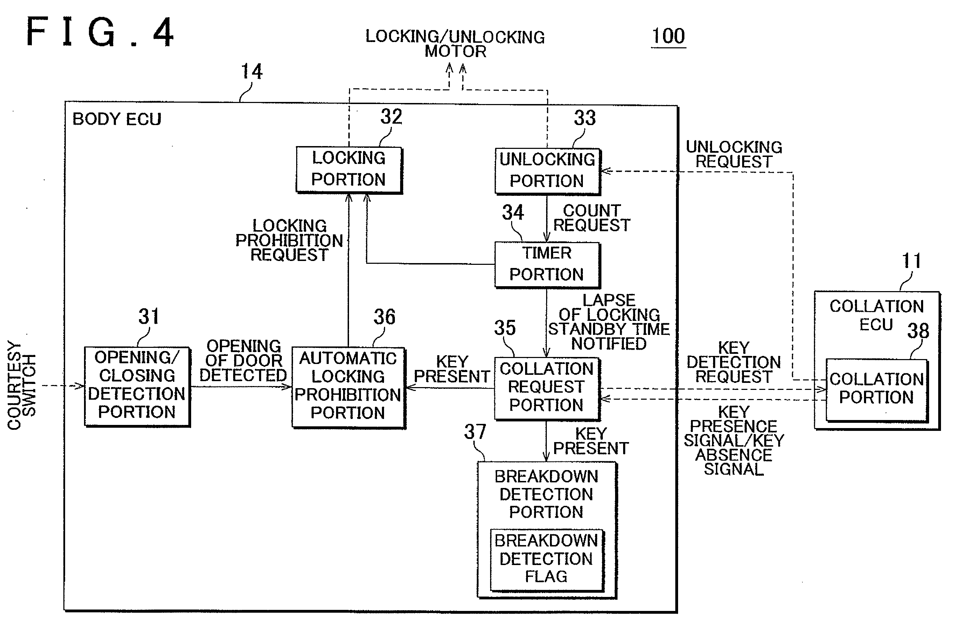

FIG. 4 is a functional block diagram of the door locking system 100 according to the first embodiment of the invention. Respective functional blocks shown in FIG. 4 are implemented through the execution of programs stored in the ROM's by the CPU's or through a piece of hardware such as ASIC or the like. A collation unit 38, with which the collation ECU 11 is equipped, determines, based on the collated ID codes and the detection areas E1 to E5 where the ID code signal is received, the detection area, either inside or outside the vehicle, in which the electronic key 30 is located. Then, when the electronic key 30 is successfully collated in a locked state, the collation unit 38 sends an unlock request to the body ECU 14.

An unlocking unit 33 of the body ECU 14 drives the locking/unlocking motor 15 to unlock all the doors, or unlock the door which corresponds to one of the detection areas E1 to E3. Once unlocked, an automatic locking function is activated. Thus, when the doors are unlocked, the unlocking unit 33 sends a timer count request to a timer unit 34 to measure the locking standby time.

After receiving the count request sent from the unlocking unit 33, the timer unit 34 starts counting the preset locking standby time. If the locking standby time is considered to be the time to allow the driver to open one of the doors, it is preferable to make the locking standby time long because the driver may get ready, for example, prepare things to bring in before opening that door. However, if the locking standby time is too long, the level of security decreases. The locking standby time is determined in accordance with this line of thought, modes of use of vehicles in various countries, cultures, and the like (the locking standby time is about 30 seconds in Japan, but differs depending on specifications in various countries). When the locking standby time has elapsed, the timer unit notifies a collation request unit 35 and the locking unit 32 that the locking standby time has elapsed.

Thus, the locking unit 32 drives the locking/unlocking motor 15 to the locking side to lock all the doors unless automatic locking is prohibited.

When the timer unit 34 notifies the collation request unit 35 that the locking standby time has elapsed, the collation request unit 35 sends a request signal to request the collation ECU 11 to determine whether the electronic key 30 is inside the vehicle. Thus, the collation request unit 35 receives a key presence signal or a key absence signal from the collation unit 38 of the collation ECU 11. Accordingly, the collation request unit 35 and the collation unit 38 serve as the electronic key detection means of the invention.

Then, an automatic locking prohibition unit 36 prohibits the doors from being locked in two modes. The first mode is adopted when the opening/closing detection unit 31 detects the opening of any door by the courtesy switch 16 before the locking standby time has elapsed. That is, if the opening of any one of the doors is detected even once before the locking standby time has elapsed, the automatic locking prohibition unit 36 sends a locking prohibition request to the locking unit 32 to prohibit the doors from being locked if that door is subsequently closed. This is because the driver is considered to rarely forget to lock the doors after actually opening the door.

The second mode is adopted when the collation unit 38 detects the presence of the electronic key 30 inside the vehicle (when the collation request unit 35 receives a key presence signal). This is because the locking of the doors leads to confmement of the electronic key 30 when the electronic key 30 is inside the vehicle. That is, when the collation request unit 35 notifies the automatic locking prohibition unit 36 that the electronic key 30 is inside the vehicle, the automatic locking prohibition unit 36 sends a locking prohibition request to the locking unit 32.

If the electronic key 30 is detected inside the vehicle despite a failure to detect the opening of any of the doors after the locking standby time has elapsed, a malfunction may have occurred in the courtesy switch 16. Accordingly, the door locking system 100 according to the first embodiment of the invention may prevent the electronic key 30 from being locked in the vehicle even if the courtesy switch 16 is malfunctioning. For example, the electronic key 30 may be inside the vehicle due to a specific situation in which a door window is open or has been destroyed. However, this possibility may be excluded because the opening or destruction of the door window is detected by a sensor.

Further, a switch malfunction detection unit 37 determines that a malfunction has occurred in the courtesy switch 16 if the electronic key 30 is detected inside the vehicle and opening of any of the doors has not been detected. That is, if the collation request unit 35 notifies the switch malfunction detection unit 37 that the electronic key 30 is detected in the vehicle interior the opening of any of the doors has not been detected after the doors have been unlocked from outside of the vehicle, the switch malfunction detection unit 37 determines that the courtesy switch 16 has malfunctioned. If the vehicle has a plurality of doors, it is difficult to identify the particular door is mounted with the malfunctioning courtesy switch 16. However, if it is assumed that this door is located closest to the detection area E1 outside the vehicle in which the electronic key 30 is detected and to the detection area E4 in which the electronic key 30 is detected, the broken-down courtesy switch 16 may be appropriately identified. The switch malfunction detection unit 37 records a malfunction of the courtesy switch 16 as well as information on specification of the door, a type of the malfunction, a detection time, and the like.

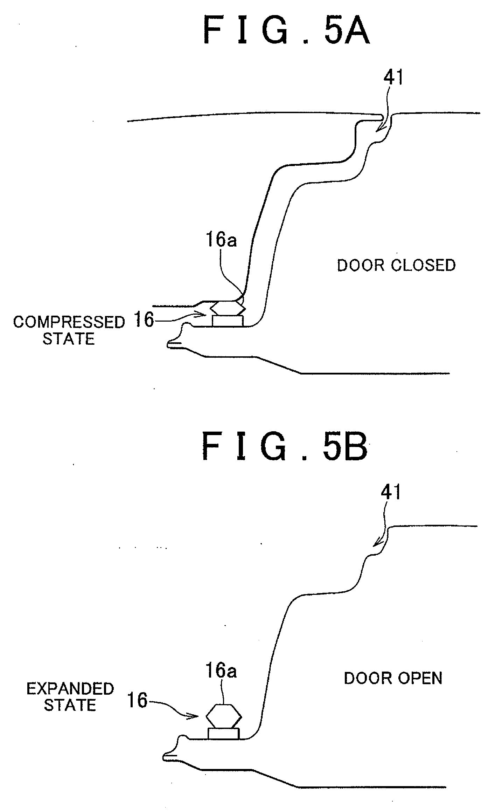

The courtesy switch 16 is often broken down temporarily. FIG. 5A is a schematic diagram of the courtesy switch 16 when the door is closed. FIG. 5B is a schematic diagram of the courtesy switch 16 when the door is open. The courtesy switch 16 is mounted in a door opening portion 41 of a vehicle body, with a physical deformation portion 16a of the courtesy switch 16 oriented toward the outside of the vehicle. An elastic member such as a spring, a rubber piece, or the like is provided inside the deformation portion 16a while being urged in such a direction as to expand the deformation portion 16a. Therefore, the deformation portion 16a assumes an expanded state when the door is open, and assumes a compressed state when the door is closed. The courtesy switch 16 detects the opening/closing of the door by monitoring a signal of a contact point that turns on when the deformation portion 16a assumes either the expanded state or the compressed state.

The courtesy switch 16 may malfunction when the deformation portion 16a is restricted from being deformed, but is so designed as to exhibit sufficient strength to endure an impact caused upon opening/closing the door. The courtesy switch 16 may malfunction, but such malfunctions are generally temporary. For example, when the temperature of air falls when the door is still wet while or after being closed, the deformation portion 16a assuming the compressed state freezes. Accordingly, the deformation portion 16a cannot expand even when the door is opened. In this case, the courtesy switch 16 cannot detect the opening of the door and hence is malfunctioning.

However, if the deformation portion 16a freezes with the door open, it is difficult to deform the deformation portion 16a in closing the door. Thus, the courtesy switch 16 cannot detect the closing of the door and hence is malfunctioning. The vehicle includes a large number of control logics allowing detection of the opening/closing of the door. Therefore, in any type of malfunction, an abnormality can be recorded in freeze frame data (FFD) or the like of various ECU's.

However, the above malfunction resolves itself when the temperature of air rises. Therefore, even if an attempt is made to refer to the FFD to thereafter specify a broken-down region, there is no abnormality in the courtesy switch 16 and hence a cause for the FFD cannot be specified.

Meanwhile, the switch malfunction detection unit 37 according to the first embodiment of the invention records a malfunction of the courtesy switch 16, which often malfunctions temporarily as described above, and thereby can easily specify that the cause for the FFD is due to a temporary malfunction of the courtesy switch 16. If a malfunction making it impossible to detect the closing of any one of the doors occurs, the door locking system 100 cannot activate the automatic locking function (cannot lock the door when it is open). In principle, however, a malfunction recordable in the first embodiment of the invention is a failure to detect the opening of the door.

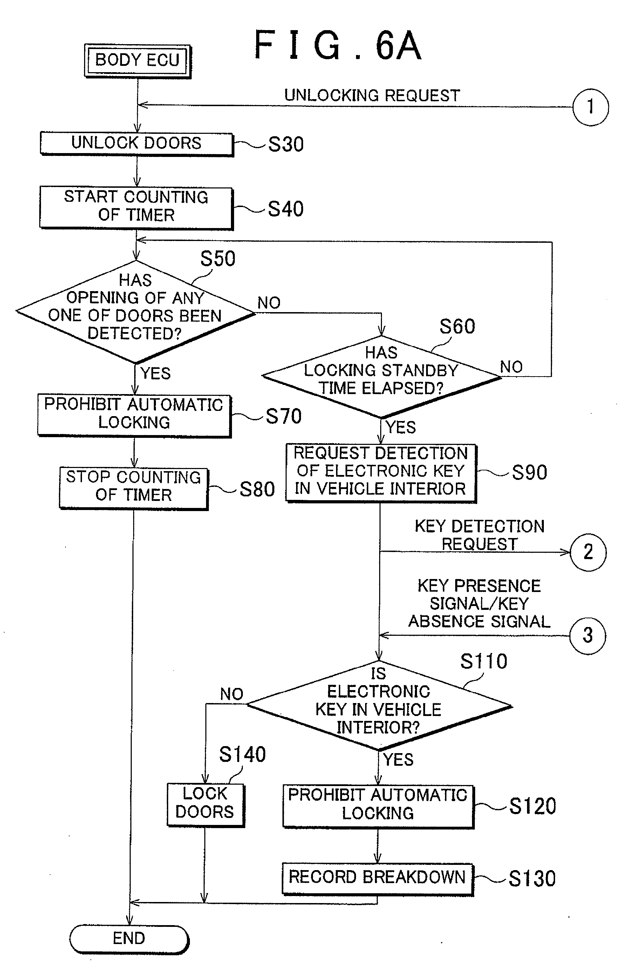

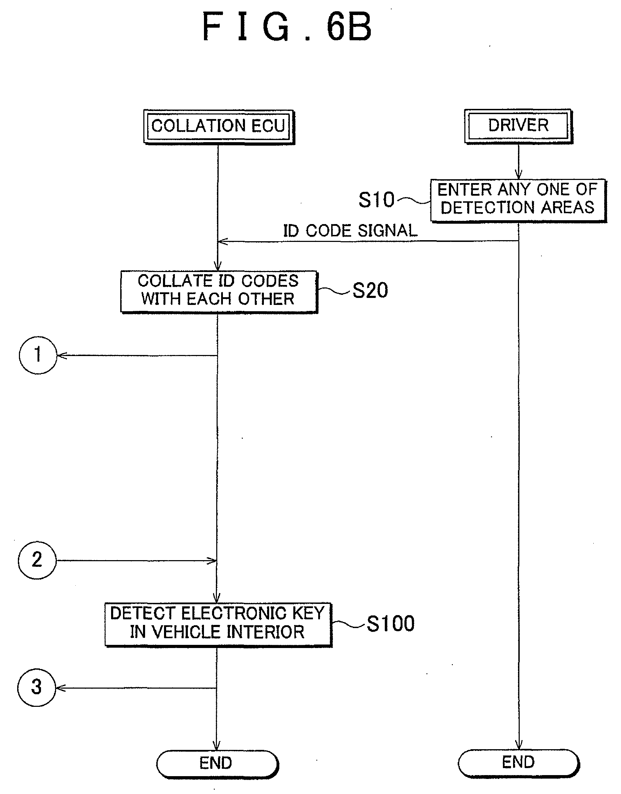

FIG. 6 is a flowchart showing a process of automatic locking executed by the door locking system 100 according to the first embodiment of the invention. When the vehicle is parked, the collation ECU 11 forms the detection areas E1 to E3 while intermittently sending request electric waves. When the driver carrying the electronic key 30 enters any of the detection areas E1 to E3, the electronic key 30 sends an ID code signal to the collation ECU 11 (S10).

The collation ECU 11 collates an ID code contained in the ID code signal, and sends an unlocking request to the body ECU 14 if the collation is successful (S20). The unlocking unit 33 of the body ECU 14 drives the locking/unlocking motor 15 to unlock all the doors (S30). Further, the timer unit 34 of the body ECU 14 starts the counting of the timer immediately after the doors (S40) are unlocked. The locking standby time is thereby counted.

During the counting of the timer, the opening/closing detection unit 31 of the body ECU 14 monitors detection of any of the doors by the courtesy switch 16 (S50), and repeats this determination until the locking standby time elapses (No in S60).

If the opening/closing detection unit 31 of the body ECU 14 detects the opening of any one of the doors before the lapse of the locking standby time (Yes in S50), the automatic locking prohibition unit 36 of the body ECU 14 sends a locking prohibition request to the locking unit 32 of the body ECU 14 (S70). Further, when the locking of the doors is prohibited, there is no need to count the lapse of the locking standby time. Therefore, the timer unit 34 of the body ECU 14 stops the counting of the timer (S80).

If the locking standby time has elapsed and the opening/closing detection unit 31 does not detect the opening of any of the doors (Yes in S60), the collation request unit 35 of the body ECU 14 sends a key detection request to the collation ECU 11 (S90). Thus, the collation unit 38 of the collation ECU 11 sends request signals from the antennae A4 and A5 to form the detection areas E4 and E5 inside the vehicle respectively. If the electronic key 30 is inside the vehicle, the collation unit 38 acquires the ID code to thereby detect the electronic key 30. In accordance with a result of detection, the collation unit 38 of the collation ECU 11 sends an electronic key presence signal or an electronic key absence signal to the body ECU 14 (S100).

The collation request unit 35 of the body ECU 14 determines whether the electronic key 30 is inside the vehicle (S110). If the electronic key 30 is not inside the vehicle (No in S110), the locking unit 32 locks all the doors (S140). In this case, the vehicle is in a parked state, and the collation ECU 11 forms the detection areas E1 to E3 while intermittently sending request electric waves again.

If the electronic key 30 is inside the vehicle (Yes in S110), the automatic locking prohibition unit 36 of the body ECU 14 sends a locking prohibition request to the locking unit 32 of the body ECU 14 (S120). Further, the switch malfunction detection unit 37 of the body ECU 14 detects a malfunction of the courtesy switch 16 and records the malfunction (S130). In this case, the driver may be considered to have opened the door. Therefore, the doors are eventually locked through the operation of the driver.

In consideration of a situation in which the driver leaves the vehicle with the electronic key 30 left in the vehicle, the automatic locking prohibition unit 36 may prohibit the doors from being locked and then cancel prohibition of the locking of the doors after a predetermined time has elapsed. Further, the driver may be made alerted to a locked state of the doors by repeating the control of unlocking the doors immediately after the locking thereof more than once after the lapse of a predetermined time and hence drawing attention of the driver with sounds made in locking and unlocking the doors. It may be difficult for the driver to distinguish between the sound made in locking the doors and the sound made in unlocking the doors. Therefore, the driver can be expected to confirm the locked state of the doors by opening/closing the door for the driver seat. After opening this door, the driver may be induced to perform an operation to lock the doors. The body ECU 14 may then directly control the locking/unlocking of the doors. Therefore, no increases in the cost of hardware are incurred.

Further, if the electronic key 30 is left inside the vehicle even after drawing attention of the driver with the sounds made in locking/unlocking the doors, prohibition of the locking of the doors may be canceled in consideration of a situation in which the driver leaves the vehicle with the electronic key 30 left inside the vehicle.

If the doors are locked when the electronic key 30 is left inside the vehicle, the driver has himself/herself identified by accessing a server from a cellular phone or a smart phone or calling an operator at a user service of a vehicle maker, and may thereby unlock the doors via a network. In this manner, the driver may access the electronic key 30.

As described above, the door locking system 100 according to the first embodiment of the invention determines whether the electronic key 30 is inside the vehicle and prohibits automatic locking of the doors if the courtesy switch 16 does not detect the opening of any of the doors. Therefore, even if the courtesy switch 16 is malfunctioning, the door locking system 100 can prevent the electronic key 30 from being locked in the vehicle. Further, if it is determined that the electronic key 30 is in the vehicle, a malfunction of the courtesy switch 16 is recorded. Therefore, an abnormality in a component resulting from the courtesy switch 16 or a malfunction of the courtesy switch 16, which often malfunctions temporarily, may be analyzed later.

Further, the door locking system 100 according to the first embodiment of the invention makes it possible to prevent a passenger from being locked in the vehicle when the door locking system 100 includes a double locking function. The double locking function prohibits the doors from being opened even if the doors are unlocked from inside the vehicle and an inside lever is operated. This function is provided mainly for the purpose of preventing a child from opening any of the doors without permission. When a passenger such as a child or the like gets into the vehicle after the doors are unlocked, the opening of one of the doors is not detected due to a malfunction in the courtesy switch 16. Accordingly, the doors are automatically locked and the passenger cannot get out of the vehicle on his/her own. However, the door locking system 100 according to the first embodiment of the invention does not automatically lock the doors as long as the passenger carries the electronic key 30. Therefore, the door locking system 100 may prevent the passenger from being confined due to the double locking function.

In the first embodiment of the invention, the body ECU 14 and the collation ECU 11 determine whether to automatically lock the doors while communicating with each other. In the second embodiment of the invention, however, the collation ECU 11 alone determines whether to automatically lock the doors. If communication between the body ECU 14 and the collation ECU 11 is not required, even when the courtesy switch 16 is not malfunctioning but the body ECU 14 erroneously acquires a signal from the courtesy switch 16, automatic locking of the doors may be prohibited without being affected by this erroneous signal. Also, the electronic key 30 may be prevented from being locked in the vehicle.

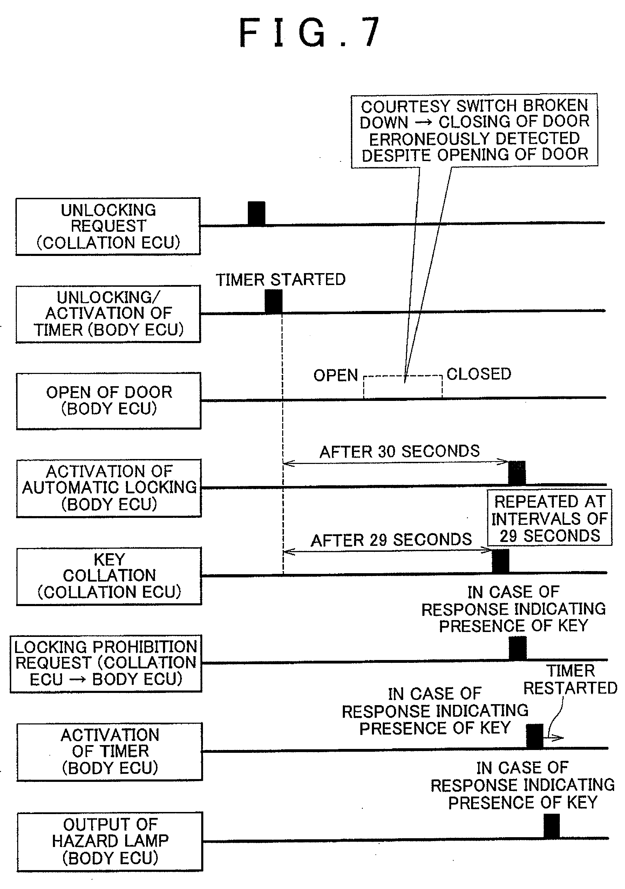

FIG. 7 is a diagram illustrating in a time-series manner the process of automatic locking by the door locking system 100 according to the second embodiment of the invention. The first to third time-series graphs are identical to those of FIG. 1. When an unlocking request from the electronic key 30 is received from outside the vehicle, the door locking system unlocks the doors, and the timer is started. The counting of the timer is continued while monitoring whether the opening of any of the doors has been detected. When the user opens the door, as indicated by dotted lines, before the locking standby time has elapsed, the courtesy switch 16 detects the opening of the door. However, if the courtesy switch is malfunctioning, a closed state of the door is erroneously detected. The collation ECU 11 authenticates the electronic key 30 and sends an unlocking request to the body ECU 14. Accordingly, the collation ECU 11 knows that the automatic locking function has been activated. Utilizing this fact, in the second embodiment of the invention, the collation ECU 11 also starts the counting of a timer in response to the output of an unlocking request by the collation ECU 11. A measurement time (hereinafter referred to as a collation standby time) is slightly shorter than the locking standby time. When the collation standby time has elapsed, the collation ECU 11 sends a request signal to the vehicle interior, and determines from the presence or absence of a response to the request signal whether the electronic key 30 is inside the vehicle. The collation ECU 11 sends a locking prohibition request to the body ECU 14 (only) the response of the electronic key 30 comes from inside the vehicle. Accordingly, the electronic key 30 can be prevented from being locked in the vehicle. Further, the body ECU 14 starts the timer again to detect the subsequent timing when the doors are locked. By thus setting the timer repeatedly, the doors may be locked at the latest within the locking standby time after the electronic key 30 is taken out from the vehicle interior.

In accordance with the setting of the timer of the body ECU 14, referring to a fifth time-series graph from above in FIG. 7, the collation ECU 11 also sends a request signal to the vehicle interior each time the collation standby time has elapsed. The collation ECU 11 then determines from the presence or absence of a response to the request signal whether the electronic key 30 is inside the vehicle. Accordingly, the collation ECU 11 sends a locking prohibition request again immediately before the timer of the body ECU starts counting the locking standby time. Further, when the electronic key 30 is inside the vehicle, the body ECU 14 blinks a hazard lamp to notify the driver that the electronic key 30 inside the vehicle.

In general, the body ECU 14 includes the function of counting the timer for the automatic locking function. Therefore, the electronic key 30 may be prevented from being confined without modifying the body ECU 14. Further, it is sufficient for the collation ECU 11 to detect the electronic key 30 inside the vehicle every time the collation standby time elapses as long as the electronic key 30 is detected inside the vehicle. Therefore, the number of modifications to the software of the door locking system 100 may be minimized.

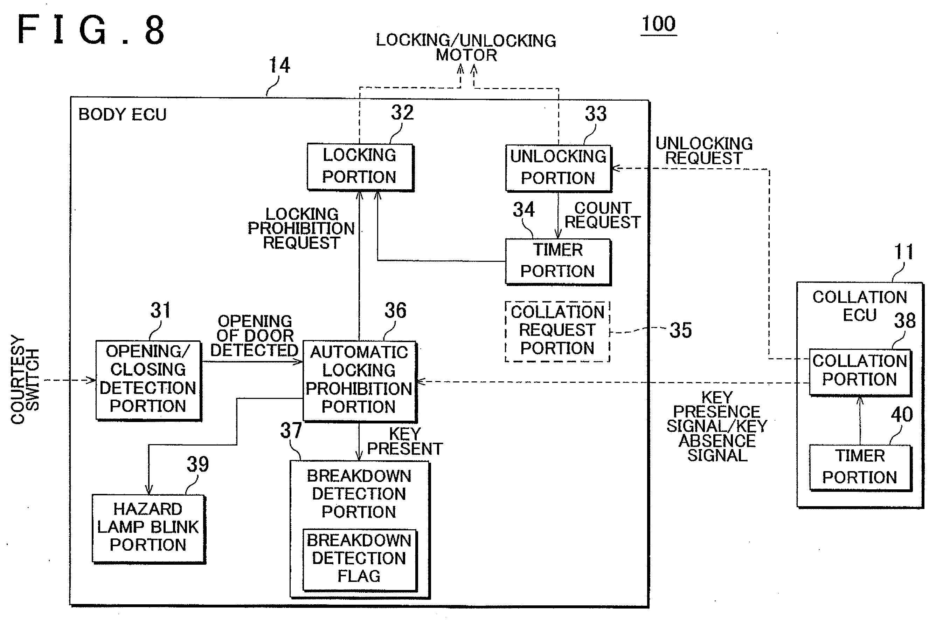

FIG 8 is an example functional block diagram of the door locking system 100 according to the second embodiment of the invention. In FIG. 8, components identical to those of FIG. 4 are denoted by the same reference symbols, and the description thereof is omitted. The body ECU 14 of FIG. 8 does not send a key detection request to the collation ECU 11 and hence does not include the collation request unit 35. Further, the body ECU 14 includes a hazard lamp blink unit 39 for blinking the hazard lamp. The hazard lamp is used to warn the driver that the electronic key 30 is in the vehicle. Accordingly, it would also be acceptable to issue a warning beep or light up a head lamp or a direction indicator lamp instead of using the hazard lamp. Regardless of the particular warning mechanism used, it would be under the control of the body ECU 14. Therefore, the number of modifications to be made to the software of the door locking system 100 is small.

However, the collation ECU 11 has a timer unit 40. Every time the collation standby time elapses, the timer unit 40 notifies the collation unit 38. Every time the collation standby time elapses, the collation unit 38 intermittently sends request signals from the antennae A4 and A5 to determine whether the electronic key 30 is inside the vehicle. Because the locking of the doors may be prohibited until the locking standby time has elapsed, the collation standby time is set to 29 seconds in FIG. 7.

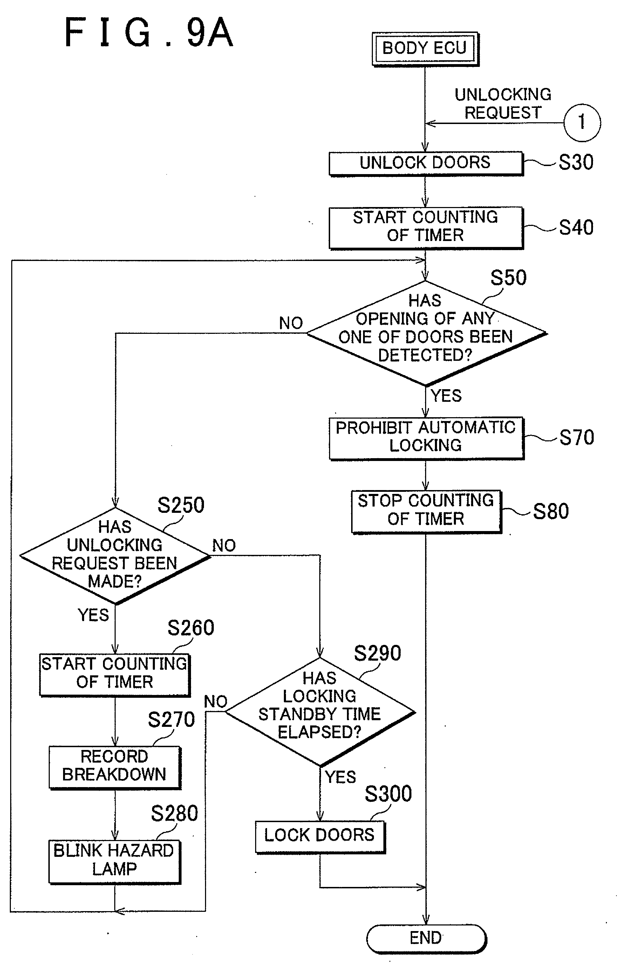

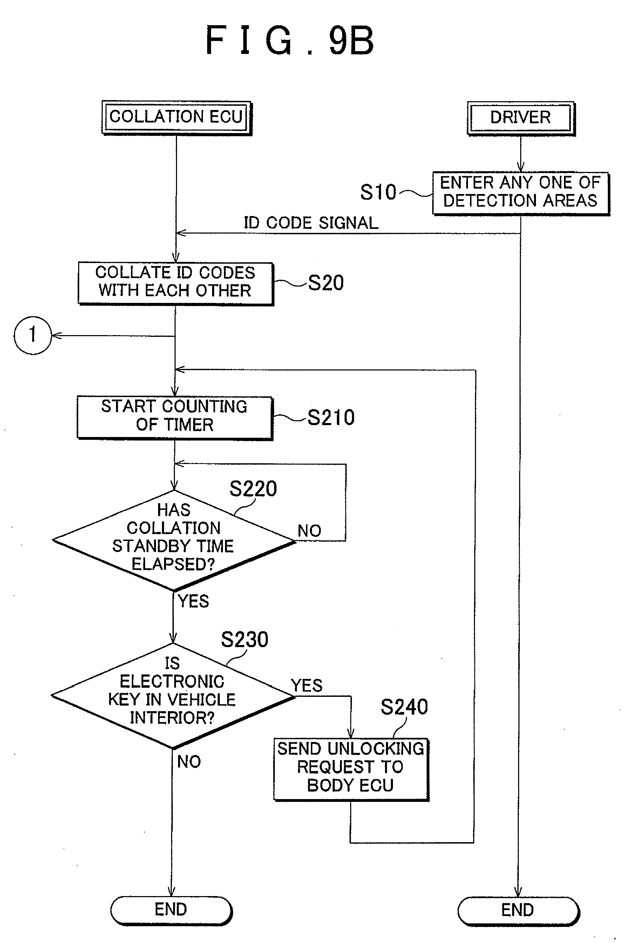

FIG. 9 is a flowchart showing a procedure of automatic locking by the door locking system 100 according to the second embodiment of the invention. In FIG. 9, the same steps as in FIG. 6 will be described simply.

When the driver carrying the electronic key 30 enters, the timer unit 34 of the body ECU 14 starts the counting of the timer (S10 to S40). Further, when the opening/closing detection unit 31 of the body ECU 14 detects the opening of any of the doors before the locking standby time has elapsed during the counting of the timer (Yes in S50), the automatic locking prohibition unit 36 of the body ECU 14 sends a locking prohibition request to the locking unit 32 of the body ECU 14 (S70), and the timer unit 34 of the body ECU 14 stops the counting of the timer (S80). If the opening/closing detection unit 31 detects the opening of any one of the doors before the locking standby time has elapsed, the body ECU 14 notifies the collation ECU 11 of the opening of the door. Therefore, the collation ECU 11 does not execute the subsequent processing steps.

However, the timer unit 40 of the collation ECU 11 starts the counting of the timer in response to the transmission of an unlock request (S210), and continues the counting of the timer until the collation standby time has elapsed (S220).

Then, after the collation standby time has elapsed (Yes in S220), the collation unit 38 of the collation ECU 11 determines whether the electronic key 30 is inside the vehicle (S230). If the electronic key 30 is not inside the vehicle (No in S230), there is no possibility of locking the electronic key 30 in the vehicle. Therefore, the collation ECU 11 terminates the operation immediately.

If the electronic key 30 is inside the vehicle (Yes in S230), the body ECU 14 locks the doors after the locking standby time has elapsed. Therefore, the collation unit 38 of the collation ECU 11 sends an unlock request to the body ECU 14 (S240). In this case, the collation ECU 11 counts the timer again, and hence repeats the operation from step S210.

However, if the opening of any door is not detected (No in S50), the body ECU 14 determines whether an unlock request has been received (S250). If the unlock request has been received (Yes in S250), it is determined that the electronic key 30 is inside the vehicle. Therefore, the timer unit 34 of the body ECU 14 starts the counting of the timer again (S260). Furthermore, in this case, the electronic key 30 is inside the vehicle although the opening or closing of any one of the doors is detected. Therefore, the switch malfunction detection unit 37 records a malfunction (S270). The hazard lamp blink unit 39 then blinks the hazard lamp to warn the user that the electronic key 30 is still in the vehicle (S280).

If the driver does not take the electronic key 30 despite the blinking of the hazard lamp, prohibition of the locking of the doors may be canceled. Further, when the body ECU 14 resumes the counting of the timer, it is appropriate to gradually reduce the locking standby time and the collation standby time by the same length (e.g., several seconds), and then reduce the time period to the subsequent blinking of the hazard lamp. A sense of urgency can be produced to urge the driver to take out the electronic key 30.

If the unlocking request has not been received (No in S250), the locking unit 32 of the bodyECU 14 determines whether the locking standby time has elapsed (S290), and repeats the processes from step 50 until the locking standby time elapses. If the locking standby time elapses (Yes in S290), the locking unit 32 of the body ECU 14 locks the doors (S300). In this case, the driver has removed the electronic key 30 from inside the vehicle.

In addition to the effect of the first embodiment of the invention, the door locking system 100 according to the second embodiment of the invention makes it possible to minimize the number of modifications to be made to the software of the collation ECU 11, and thereby minimizes the increase in cost.

While the invention has been described with reference to the example embodiments thereof, it should be understood that the invention is not limited to the described embodiments or constructions. To the contrary, the invention is intended to cover various modifications and equivalent arrangements. In addition, while the various elements of the example embodiments are shown in various example combinations and configurations, other combinations and configurations, including more, less or only a single element, are also within the spirit and scope of the invention.

A vehicle door locking system (100) that includes communication means (12, 13) for communicating with an electronic key (30), unlocking means (33, 15) for unlocking doors when the electronic key is authenticated, and door locking means for locking the vehicle doors if the opening of any vehicle door is not detected within a predetermined time after the doors have been unlocked by the unlocking means, comprising electronic key detection means (35, 38) for sending a request signal to an interior of the vehicle to request the electronic key to communicate with the communication means when the first predetermined time has elapsed and the opening/closing detection means (16) has not detected the opening of any of the doors, wherein locking the doors by the door locking means (32, 15) is not performed if the electronic key detection means determines that the electronic key is in the vehicle interior.

## Claims

1. A vehicle door locking system (100) that includes opening/closing detection means (16) for detecting opening/closing of vehicle doors individually; communication means (12, 13) for sending to an electronic key (30) a request signal to request the electronic key (30) equipped with a radio communication unit to send a stored ID code signal and receiving the ID code signal sent from the electronic key (30); authentication means (11) for authenticating the electronic key (30) through the ID code signal; unlocking means (33, 15) for unlocking the doors when the electronic key (30) is authenticated; and door locking means (32, 15) for locking the vehicle doors if the opening of any vehicle door is not detected within a first predetermined time after the doors have been unlocked by the unlocking means (33, 15),
electronic key detection means (35, 38) for sending a request signal through the communication means (12, 13) to an interior of the vehicle to request the electronic key (30) to send the ID code signal when the first predetermined time has elapsed and the opening/closing detection means (16) has not detected the opening of any of the doors, and determining that the electronic key (30) is in the vehicle interior if the ID code signal from the electronic key (30) is received;
door locking prohibition means (36) for prohibiting the door locking means (32, 15) from locking the doors if the electronic key detection means (35, 38) determines that the electronic key (30) is in the vehicle interior;
the vehicle door locking system **characterized by** comprising:
switch malfunction detection means (37) for detecting a malfunction in the opening/closing detection means (16) and recording information specifying the malfunction in the opening/closing detection means (16) when the electronic key detection means (35, 38) determines that the electronic key is in the vehicle interior.

2. The vehicle door locking system (100) according to claim 1, wherein the switch malfunction detection means (37) records the malfunction of the opening/closing detection means (16) as a temporary malfunction that is automatically resolved overtime.

3. The vehicle door locking system (100) according to any one of claims 1 to 2, further comprising:
a first electronic control unit that controls locking/unlocking of the doors; and
a second electronic control unit that controls authentication of the electronic key and that is formed separately from the first electronic control unit, wherein
the electronic key detection means (38), which belongs to the second electronic control unit, sends a request signal requesting the electronic key (30) to communicate with the communication means (12,13) when a second predetermined time stored in advance, which is shorter than the first predetermined time, has elapsed and the opening/closing detection means (16) does not detect the opening of any of the doors, and
the electronic key detection means (38) sends a request signal to request the first electronic control unit to recount the first predetermined time and recounts the second predetermined time if the electronic key detection means (38) determines that the electronic key (30) is in the vehicle interior.

4. The vehicle door locking system (100) according to any one of claims 1 to 3, wherein
locking the doors by the door locking means (32, 15) is performed if a predetermined time has elapsed after the electric key detection means (35, 38) determines that the electric key (30) is in the vehicle interior and locking the doors by the door locking means (32, 15) is not performed.

5. The vehicle door locking system (100) according to any one of claims 1 to 4, further comprising:
warning means (39) for issuing a warning to an outside of the vehicle if the electronic key detection means (35, 38) determines that the electronic key (30) is in the vehicle interior.

6. The vehicle door locking system (100) according to claim 5, wherein the warning means (39) repeatedly issues warnings to the outside of the vehicle and reduces an interval between successive warnings.

7. A keyless entry system (200) having a vehicle door locking system (100), that includes opening/closing detection means (16) for detecting opening/closing of vehicle doors individually; communication means (12, 13) for sending to an electronic key (30) a request signal to request the electronic key (30) equipped with a radio communication unit to send a stored ID code signal and receiving the ID code signal sent from the electronic key (30); authentication means (11) for authenticating the electronic key (30) through the ID code signal; unlocking means (33, 15) for unlocking the doors when the electronic key (30) is authenticated; and door locking means (32, 15) for locking the vehicle doors if the opening of any vehicle door is not detected within a first predetermined time after the doors have been unlocked by the unlocking means (33, 15), and the electronic key (30), which sends the stored ID code signal when a request signal to request to send the ID code signal is received,
electronic key detection means (35, 38) for sending a request signal through the communication means (12, 13) to an interior of the vehicle to request the electronic key (30) to send the ID code signal when the first predetermined time has elapsed and the opening/closing detection means (16) has not detected the opening of any of the doors, and determining that the electronic key (30) is in the vehicle interior if the ID code signal from the electronic key (30) is received;
door locking prohibition means (36) for prohibiting the door locking means (32, 15) from locking the doors if the electronic key detection means (35, 38) determines that the electronic key (30) is in the vehicle interior;
the keyless entry system **characterized by** comprising:
switch malfunction detection means (37) for detecting a malfunction in the opening/closing detection means (16) and recording information specifying the malfunction in the opening/closing detection means (16) when the electronic key detection means (35, 38) determines that the electronic key is in the vehicle interior.

8. A locking control method for a vehicle door locking system (100), that includes opening/closing detection means (16) for detecting opening/closing of vehicle doors individually; communication means (12, 13) for sending a request signal to request an electronic key (30) equipped with a radio communication unit to send a stored ID code signal and receiving the ID code signal sent from the electronic key (30); authentication means (11) for authenticating the electronic key (30) through the ID code signal; unlocking means (33, 15) for unlocking the doors when the electronic key (30) is authenticated; and door locking means (32, 15) for locking the vehicle doors if the opening of any vehicle door is not detected within a first predetermined time after the doors have been unlocked by the unlocking means (33, 15), the locking control method comprising:
sending a request signal to an interior of the vehicle to request the electronic key (30) to send the ID code signal if opening of any of the doors is not detected within the first predetermined time;
determining that the electronic key (30) is in the vehicle interior if the ID code signal from the electronic key (30) is received;
prohibiting the doors from locking, even if opening of any of the doors is not detected within the first predetermined time, if it is determined that the electronic key (30) is in the vehicle interior;
the locking control method **characterized by** comprising:
detecting a malfunction in the opening/closing detection means (16) and recording information specifying the malfunction in the opening/closing detection means (16) when it is determined that the electronic key is in the vehicle interior.

9. A locking control method for a keyless entry system (200) that has a vehicle door locking system (100), that includes opening/closing detection means (16) for detecting opening/closing of vehicle doors individually; communication means (12, 13) for sending a request signal to request an electronic key (30) equipped with a radio communication unit to send a stored ID code signal and receiving the ID code signal sent from the electronic key (30); authentication means (11) for authenticating the electronic key (30) through the ID code signal; unlocking means (33, 15) for unlocking the doors when the electronic key (30) is authenticated; and door locking means (32, 15) for locking the vehicle doors if the opening of any vehicle door is not detected within a first predetermined time after the doors have been unlocked by the unlocking means (33, 15), and the electronic key (30), which sends the stored ID code signal when a request signal to request to send the ID code signal is received, the locking control method comprising:
sending a request signal to an interior of the vehicle to request the electronic key (30) to send the ID code signal if opening of any of the doors is not detected within the first predetermined time;
sending the stored ID code signal from the electronic key (30) in response to a request signal to request to send the ID code signal;
determining that the electronic key (30) is in the vehicle interior if the ID code signal from the electronic key (30) is received;
prohibiting the doors from locking, even if opening of any of the doors is not detected within the first predetermined time, if it is determined that the electronic key (30) is in the vehicle interior;
the locking control method **characterized by** comprising:
detecting a malfunction in the opening/closing detection means (16) and recording information specifying the malfunction in the opening/closing detection means (16) when it is determined that the electronic key is in the vehicle interior.

## Patentansprüche

1. Fahrzeugtürverriegelungssystem (100), die umfasst eine Öffnen-/ Schließen-Erfassungseinrichtung (16) zum individuellen Erfassen eines Öffnens/Schließens der Fahrzeugtüren; eine Kommunikationseinrichtung (12, 13) zum Senden eines Anforderungssignals an einen elektronischen Schlüssel (30), um den elektronischen Schlüssel (30), der mit einer Funkkommunikationseinheit ausgestattet ist, aufzufordern, ein gespeichertes ID-Codesignal zu senden, und zum Empfangen des ID-Codesignals, das von dem elektronischen Schlüssel (30) gesendet wird; eine Authentifizierungseinrichtung (11) zum Authentifizieren des elektronischen Schlüssels (30) durch das ID-Codesignal; eine Entriegelungseinrichtung (33, 15) zum Entriegeln der Türen, wenn der elektronische Schlüssel (30) authentifiziert wird; und eine Türverriegelungseinrichtung (32, 15) zum Verriegeln der Fahrzeugtüren, wenn das Öffnen von irgendeiner Fahrzeugtür innerhalb einer ersten vorbestimmten Zeit, nachdem die Türen durch die Entriegelungseinrichtung (33, 15) entriegelt wurden, nicht erfasst wird,
eine Einrichtung zum Erfassen eines elektronischen Schlüssels (35, 38) zum Senden eines Anforderungssignals durch die Kommunikationseinrichtung (12, 13) an einen Innenraum des Fahrzeugs, um den elektronischen Schlüssel (30) aufzufordern, das ID-Codesignal zu senden, wenn die erste vorbestimmte Zeit abgelaufen ist und die Öffnen-/Schließen-Erfassungseinrichtung (16) das Öffnen von irgendeiner der Türen nicht erfasst wird, und Bestimmen, dass der elektronische Schlüssel (30) sich in dem Fahrzeuginnenraum befindet, wenn das ID-Codesignal von dem elektronischen Schlüssel (30) empfangen wird;
eine Türverriegelungsverhinderungseinrichtung (36), um der Türverriegelungseinrichtung (32, 15) zu untersagen, die Türen zu verriegeln, wenn die Einrichtung zum Erfassen des elektronischen Schlüssels (35, 38) bestimmt, dass sich der elektronische Schlüssel (30) im Fahrzeuginnenraum befindet;
**dadurch gekennzeichnet, dass** das Fahrzeugtürverriegelungssystem aufweist:
eine Schalterfehlfunktionserfassungseinrichtung (37) zum Erfassen einer Fehlfunktion in der Öffnen-/Schließen-Erfassungseinrichtung (16) und zum Aufzeichnen von Informationen, die die Fehlfunktion in der Öffnen-/Schließen-Erfassungseinrichtung (16) spezifizieren, wenn die Einrichtung zum Erfassen des elektronischen Schlüssels (35, 38) bestimmt, dass sich der elektronische Schlüssel in dem Fahrzeuginnenraum befindet.

2. Fahrzeugtürverriegelungssystem (100) gemäß Anspruch 1, wobei die Schalterfehlfunktionserfassungseinrichtung (37) die Fehlfunktion der Öffnen-/Schließen-Erfassungseinrichtung (16) als eine vorübergehende Fehlfunktion aufzeichnet, die automatisch mit der Zeit gelöst wird.

3. Fahrzeugtürverriegelungssystem (100) gemäß einem der Ansprüche 1 bis 2, weiterhin mit:
einer ersten elektronischen Steuerungseinheit, die ein Verriegeln/Entriegeln der Türen steuert; und
einer zweiten elektronischen Steuerungseinheit, die eine Authentifizierung des elektronischen Schlüssels steuert und die separat von der ersten elektronischen Steuerungseinheit ausgestaltet ist, wobei
die Einrichtung zum Erfassen eines elektronischen Schlüssels (38), die zu der zweiten elektronischen Steuerungseinheit gehört, ein Anforderungssignal sendet, das den elektronischen Schlüssel (30) auffordert, mit der Kommunikationseinrichtung (12, 13) zu kommunizieren, wenn eine zweite vorbestimmte Zeit, die im Voraus gespeichert ist, die kürzer als die erste vorbestimmte Zeit ist, abgelaufen ist und die Öffnen-/SchließenErfassungseinrichtung (16) das Öffnen von irgendeiner der Fahrzeugtüren nicht erfasst, und
die Einrichtung zum Erfassen des elektronischen Schlüssels (38) ein Anforderungssignal sendet, um die erste elektronische Steuerungseinheit aufzufordern, die erste vorbestimmte Zeit erneut zu zählen und die zweite vorbestimmte Zeit zu zählen, wenn die Einrichtung zum Erfassen des elektronischen Schlüssels (38) bestimmt, dass sich der elektronische Schlüssel (30) in dem Fahrzeuginnenraum befindet.

4. Fahrzeugtürverriegelungssystem (100) gemäß einem der Ansprüche 1 bis 3, wobei
ein Verriegeln der Türen durch die Türverriegelungseinrichtung (32, 15) durchgeführt wird, wenn eine vorbestimmte Zeit abgelaufen ist, nachdem die Einrichtung zum Erfassen des elektronischen Schlüssels (35, 38) bestimmt, dass sich der elektronische Schlüssel (30) in dem Fahrzeuginneren befindet und ein Verriegeln der Türen durch die Türverriegelungseinrichtung (32, 15) nicht durchgeführt ist.

5. Fahrzeugtürverriegelungssystem (100) gemäß einem der Ansprüche 1 bis 4, weiterhin mit:
einer Warneinrichtung (39) zum Ausgeben einer Warnung nach außerhalb des Fahrzeugs, wenn die Einrichtung zum Erfassen des elektronischen Schlüssels (35, 38) bestimmt, dass sich der elektronische Schlüssel (30) im Fahrzeuginnenraum befindet.

6. Fahrzeugtürverriegelungssystem (100) gemäß Anspruch 5, wobei die Warneinrichtung (39) wiederholt Warnungen nach außerhalb des Fahrzeugs ausgibt und ein Intervall zwischen aufeinanderfolgenden Warnungen reduziert.

7. Schlüsselloses Zutrittssystem (200) mit einem Fahrzeugtürverriegelungssystem (100), das umfasst eine Öffnen-/Schließen-Erfassungseinrichtung (16) zum einzelnen Erfassen eines Öffnens/Schließens von Fahrzeugtüren; eine Kommunikationseinrichtung (12, 13) zum Senden eines Anforderungssignals an einen elektronischen Schlüssel (30), um den elektronischen Schlüssel (30), der mit einer Funkkommunikationseinheit ausgestattet ist, aufzufordern, ein gespeichertes ID-Codesignal zu senden, und zum Empfangen des ID-Codesignals, das von dem elektronischen Schlüssel (30) gesendet wird; eine Authentifizierungseinrichtung (11) zum Authentifizieren des elektronischen Schlüssels (30) durch das ID-Codesignal; eine Entriegelungseinrichtung (33, 15) zum Entriegeln der Türen, wenn der elektronische Schlüssel (30) authentifiziert wird; und eine Türverriegelungseinrichtung (32, 15) zum Verriegeln der Fahrzeugtüren, wenn das Öffnen irgendeiner der Fahrzeugtüren innerhalb einer ersten vorbestimmten Zeit, nachdem die Türen durch die Entriegelungseinrichtung (33, 15) entriegelt wurden, nicht erfasst wird, und den elektronischen Schlüssel (30), der das gespeicherte ID-Codesignal sendet, wenn ein Anforderungssignal zum Anfordern zum Senden des ID-Codesignals empfangen wird;
eine Einrichtung zum Erfassen eines elektronischen Schlüssels (35, 38) zum Senden eines Anforderungssignals durch die Kommunikationseinrichtung (12, 13) an einen Innenraum des Fahrzeugs, um den elektronischen Schlüssel (30) aufzufordern, das ID-Codesignal zu senden, wenn die erste vorbestimmte Zeit abgelaufen ist und die Öffnen-/Schließen-Erfassungseinrichtung (16) das Öffnen von irgendeiner der Türen nicht erfasst hat, und Bestimmen, dass sich der elektronische Schlüssel (30) in dem Fahrzeuginnenraum befindet, wenn das ID-Codesignal von dem elektronischen Schlüssel (30) empfangen wird;
eine Türverriegelungsverhinderungseinrichtung (36), um der Türverriegelungseinrichtung (32, 15) zu untersagen, die Türen zu verriegeln, wenn die Einrichtung zum Erfassen des elektronischen Schlüssels (35, 38) bestimmt, dass sich der elektronische Schlüssel (30) im Fahrzeuginnenraum befindet;
**dadurch gekennzeichnet, dass** das schlüssellose Zutrittssystem aufweist:
eine Schalterfehlfunktionserfassungseinrichtung (37) zum Erfassen einer Fehlfunktion in der Öffnen-/Schließen-Erfassungseinrichtung (16) und zum Aufzeichnen von Informationen, die die Fehlfunktion in der Öffnen-/Schließen-Erfassungseinrichtung (16) spezifizieren, wenn die Einrichtung zum Erfassen des elektronischen Schlüssels (35, 38) bestimmt, dass sich der elektronische Schlüssel im Fahrzeuginnenraum befindet.

8. Verriegelungssteuerungsverfahren für ein Fahrzeugtürverriegelungssystem (100), das umfasst eine Öffnen-/Schließen-Erfassungseinrichtung (16) zum einzelnen Erfassen eines Öffnens/Schließens von Fahrzeugtüren; eine Kommunikationseinrichtung (12, 13) zum Senden eines Anforderungssignals an einen elektronischen Schlüssel (30), der mit einer Funkkommunikationseinheit ausgestattet ist, um ein gespeichertes ID-Codesignal zu senden, und zum Empfangen des ID-Codesignals, das von dem elektronischen Schlüssel (30) gesendet wird; eine Authentifizierungseinrichtung (11) zum Authentifizieren des elektronischen Schlüssels (30) durch das ID-Codesignal; eine Entriegelungseinrichtung (33, 15) zum Entriegeln der Türen, wenn der elektronische Schlüssel (30) authentifiziert ist; und eine Türverriegelungseinrichtung (32, 15) zum Verriegeln der Fahrzeugtüren, wenn ein Öffnen von irgendeiner Fahrzeugtür nicht innerhalb einer ersten vorbestimmten Zeit erfasst wird, nachdem die Türen durch die Entriegelungseinrichtung (33, 15) entriegelt wurden, wobei das Verriegelungssteuerungsverfahren aufweist:
Senden eines Anforderungssignals an einen Innenraum des Fahrzeugs, um den elektronischen Schlüssel (30) aufzufordern, das ID-Codesignal zu senden, wenn ein Öffnen von irgendeiner der Türen innerhalb der ersten vorbestimmten Zeit nicht erfasst wird;
Bestimmen, dass sich der elektronische Schlüssel (30) in dem Fahrzeuginnenraum befindet, wenn das ID-Codesignal von dem elektronischen Schlüssel (30) empfangen wird;
Untersagen des Verriegelns der Türen, wenn ein Öffnen von irgendeiner der Türen nicht innerhalb der ersten vorbestimmten Zeit erfasst wird, wenn bestimmt ist, dass sich der elektronische Schlüssel (30) in dem Fahrzeuginnenraum befindet;
**dadurch gekennzeichnet, dass** das Verriegelungssteuerungsverfahren aufweist:
Erfassen einer Fehlfunktion in der Öffnen-/Schließen-Erfassungseinrichtung (16) und Aufzeichnen von Informationen, die die Fehlfunktion in der Öffnen-/Schließen-Erfassungseinrichtung (16) spezifizieren, wenn bestimmt ist, dass sich der elektronische Schlüssel in dem Fahrzeuginnenraum befindet.

9. Verriegelungssteuerungsverfahren für ein schlüsselloses Zutrittssystem (200), das ein Fahrzeugtürverriegelungssystem (100) aufweist, das umfasst eine Öffnen-/Schließen-Erfassungseinrichtung (16) zum einzelnen Erfassen eines Öffnens/Schließens von Fahrzeugtüren; eine Kommunikationseinrichtung (12, 13) zum Senden eines Anforderungssignals, um einen elektronischen Schlüssel (30), der mit einer Funkkommunikationseinheit ausgestattet ist, aufzufordern, ein gespeichertes ID-Codesignal zu senden, und zum Empfangen des ID-Codesignals, das von dem elektronischen Schlüssel (30) gesendet wird; eine Authentifizierungseinrichtung (11) zum Authentifizieren des elektronischen Schlüssels (30) durch das ID-Codesignal; eine Entriegelungseinrichtung (33, 15) zum Entriegeln der Türen, wenn der elektronische Schlüssel (30) authentifiziert wird; und eine Türverriegelungseinrichtung (32, 15) zum Verriegeln der Fahrzeugtüren, wenn das Öffnen von irgendeiner Fahrzeugtür innerhalb einer ersten vorbestimmten Zeit nicht erfasst wird, nachdem die Türen durch die Entriegelungseinrichtung (33, 15) entriegelt wurden, und den elektronischen Schlüssel (30), der das gespeicherte ID-Codesignal sendet, wenn ein Anforderungssignal empfangen wird, das auffordert, das ID-Codesignal zu senden, wobei das Verriegelungssteuerungsverfahren aufweist:
Senden eines Anforderungssignals an einen Innenraum des Fahrzeugs, um den elektronischen Schlüssel (30) aufzufordern, das ID-Codesignal zu senden, wenn ein Öffnen von irgendeiner der Türen innerhalb der ersten vorbestimmten Zeit nicht erfasst wird;
Senden des gespeicherten ID-Codesignals von dem elektronischen Schlüssel (30) als Reaktion auf ein Anforderungssignal, das auffordert, das ID-Codesignal zu senden;
Bestimmen, dass sich der elektronische Schlüssel (30) in dem Fahrzeuginnenraum befindet, wenn das ID-Codesignal von dem elektronischen Schlüssel (30) empfangen wird;
Untersagen des Verriegelns der Türen, auch wenn ein Öffnen von irgendeiner der Türen innerhalb der ersten vorbestimmten Zeit nicht erfasst wird, wenn bestimmt ist, dass sich der elektronische Schlüssel (30) in dem Fahrzeuginnenraum befindet;
**dadurch gekennzeichnet, dass** das Verriegelungssteuerungsverfahren aufweist:
Erfassen einer Fehlfunktion in der Öffnen-/Schließen-Erfassungseinrichtung (16) und Aufzeichnen von Informationen, die die Fehlfunktion in der Öffnen-/Schließen-Erfassungseinrichtung (16) spezifizieren, wenn bestimmt ist, dass sich der elektronische Schlüssel in dem Fahrzeuginnenraum befindet.

## Revendications

1. Système de verrouillage de porte de véhicule (100) qui comporte un moyen de détection d'ouverture/fermeture (16) pour détecter l'ouverture/fermeture des portes de véhicule individuellement ; un moyen de communication (12, 13) pour envoyer à une clé électronique (30) un signal de demande afin de demander à la clé électronique (30) équipée d'une unité de communication radio d'envoyer un signal de code d'identification stocké et pour recevoir le signal de code d'identification envoyé par la clé électronique (30) ; un moyen d'authentification (11) pour authentifier la clé électronique (30) à travers le signal de code d'identification ; un moyen de déverrouillage (33, 15) pour déverrouiller les portes lorsque la clé électronique (30) est authentifiée ; et un moyen de verrouillage de porte (32, 15) pour verrouiller les portes de véhicule si l'ouverture d'une porte quelconque de véhicule n'est pas détectée pendant une première durée prédéterminée après que les portes ont été déverrouillées par le moyen de déverrouillage (33, 15),
un moyen de détection de clé électronique (35, 38) pour envoyer un signal de demande à travers le moyen de communication (12, 13) à l'intérieur du véhicule afin de demander à la clé électronique (30) d'envoyer le signal de code d'identification lorsque la première durée prédéterminée s'est écoulée et le moyen de détection d'ouverture/fermeture (16) n'a pas détecté l'ouverture de l'une des portes, et pour déterminer que la clé électronique (30) est dans l'habitacle de véhicule si le signal de code d'identification provenant de la clé électronique (30) est reçu ;
un moyen d'interdiction de verrouillage de porte (36) pour interdire le moyen de verrouillage de porte (32, 15) de verrouiller les portes, ce verrouillage si le moyen de détection de clé électronique (35, 38) détermine que la clé électronique (30) est dans l'habitacle de véhicule ; le système de verrouillage de porte de véhicule étant **caractérisé en ce qu'**il comprend :
un moyen de détection de dysfonctionnement de commutateur (37) pour détecter un dysfonctionnement dans le moyen de détection d'ouverture/fermeture (16) et pour enregistrer des informations spécifiant le dysfonctionnement dans le moyen de détection d'ouverture/fermeture (16) lorsque le moyen de détection de clé électronique (35, 38) détermine que la clé électronique est dans l'habitacle de véhicule.

2. Système de verrouillage de porte de véhicule (100) selon la revendication 1, dans lequel le moyen de détection de dysfonctionnement de commutateur (37) enregistre le dysfonctionnement du moyen de détection d'ouverture/fermeture (16) en tant que dysfonctionnement temporaire qui est résolu automatiquement au fil du temps.

3. Système de verrouillage de porte de véhicule (100) selon l'une quelconque des revendications 1 et 2, comprenant en outre :
une première unité de commande électronique qui commande le verrouillage/déverrouillage des portes ; et
une deuxième unité de commande électronique qui commande l'authentification de la clé électronique et qui est formée séparément de la première unité de commande électronique, dans lequel
le moyen de détection de clé électronique (38), qui appartient à la deuxième unité de commande électronique, envoie un signal de demande demandant à la clé électronique (30) de communiquer avec le moyen de communication (12, 13) lorsqu'une deuxième durée prédéterminée stockée à l'avance, qui est plus courte que la première durée prédéterminée, s'est écoulée et le moyen de détection d'ouverture/fermeture (16) ne détecte pas l'ouverture de l'une des portes, et
le moyen de détection de clé électronique (38) envoie un signal de demande pour demander à la première unité de commande électronique de recompter la première durée prédéterminée et recompte la deuxième durée prédéterminée si le moyen de détection de clé électronique (38) détermine que la clé électronique (30) est dans l'habitacle de véhicule.

4. Système de verrouillage de porte de véhicule (100) selon l'une quelconque des revendications 1 à 3, dans lequel
le verrouillage des portes par le moyen de verrouillage de porte (32, 15) est effectué si une durée prédéterminée s'est écoulée après que le moyen de détection de clé électrique (35, 38) détermine que la clé électrique (30) est dans l'habitacle de véhicule et le verrouillage des portes par le moyen de verrouillage de porte (32, 15) n'est pas effectué.

5. Système de verrouillage de porte de véhicule (100) selon l'une quelconque des revendications 1 à 4, comprenant en outre :
un moyen d'avertissement (39) pour émettre un avertissement à l'extérieur du véhicule si le moyen de détection de clé électronique (35, 38) détermine que la clé électronique (30) est dans l'habitacle de véhicule,

6. Système de verrouillage de porte de véhicule (100) selon la revendication 5, dans lequel le moyen d'avertissement (39) émet de manière répétée des avertissements à l'extérieur du véhicule et réduit un intervalle entre des avertissements successifs.

7. Système d'entrée sans clé (200) ayant un système de verrouillage de porte de véhicule (100), qui comporte le moyen de détection d'ouverture/fermeture (16) pour détecter l'ouverture/fermeture des portes de véhicule individuellement ; un moyen de communication (12, 13) pour envoyer à une clé électronique (30) un signal de demande pour demander à la clé électronique (30) équipée d'une unité de communication radio d'envoyer un signal de code d'identification stocké et pour recevoir le signal de code d'identification envoyé par la clé électronique (30) ; un moyen d'authentification (11) pour authentifier la clé électronique (30) à travers le signal de code d'identification ; un moyen de déverrouillage (33, 15) pour déverrouiller les portes lorsque la clé électronique (30) est authentifiée ; et un moyen de verrouillage de porte (32, 15) pour verrouiller les portes de véhicule si l'ouverture d'une porte quelconque de véhicule n'est pas détectée pendant une première durée prédéterminée après que les portes ont été déverrouillées par le moyen de déverrouillage (33, 15), et la clé électronique (30), qui envoie le signal de code d'identification stocké lorsqu'un signal de demande permettant de demander d'envoyer le signal de code d'identification est reçu,
un moyen de détection de clé électronique (35, 38) pour envoyer un signal de demande à travers le moyen de communication (12, 13) à l'intérieur du véhicule afin de demander à la clé électronique (30) d'envoyer le signal de code d'identification lorsque la première durée prédéterminée s'est écoulée et le moyen de détection d'ouverture/fermeture (16) n'a pas détecté l'ouverture de l'une des portes, et pour déterminer que la clé électronique (30) est dans l'habitacle de véhicule si le signal de code d'identification provenant de la clé électronique (30) est reçu ;
un moyen d'interdiction de verrouillage de porte (36) pour interdire le moyen de verrouillage de porte (32, 15) de verrouiller les portes, si le moyen de détection de clé électronique (35, 38) détermine que la clé électronique (30) est dans l'habitacle de véhicule ; le système d'entrée sans clé étant **caractérisé en ce qu'**il comprend :
un moyen de détection de dysfonctionnement de commutateur (37) pour détecter un dysfonctionnement dans le moyen de détection d'ouverture/fermeture (16) et pour enregistrer des informations spécifiant le dysfonctionnement dans le moyen de détection d'ouverture/fermeture (16) lorsque le moyen de détection de clé électronique (35, 38) détermine que la clé électronique est dans l'habitacle de véhicule.

8. Procédé de commande de verrouillage pour un système de verrouillage de porte de véhicule (100), qui comporte un moyen de détection d'ouverture/fermeture (16) pour détecter l'ouverture/fermeture des portes de véhicule individuellement ; un moyen de communication (12, 13) pour envoyer un signal de demande afin de demander à une clé électronique (30) équipée d'une unité de communication radio d'envoyer un signal de code d'identification stocké et pour recevoir le signal de code d'identification envoyé par la clé électronique (30) ; un moyen d'authentification (11) pour authentifier la clé électronique (30) à travers le signal de code d'identification ; un moyen de déverrouillage (33, 15) pour déverrouiller les portes lorsque la clé électronique (30) est authentifiée ; et un moyen de verrouillage de porte (32, 15) pour verrouiller les portes de véhicule si l'ouverture d'une porte quelconque de véhicule n'est pas détectée pendant une première durée prédéterminée après que les portes ont été déverrouillées par le moyen de déverrouillage (33, 15), le procédé de commande de verrouillage comprenant :
l'envoi d'un signal de demande à l'intérieur du véhicule pour demander à la clé électronique (30) d'envoyer le signal de code d'identification si l'ouverture de l'une des portes n'est pas détectée pendant la première durée prédéterminée ;
la détermination du fait que la clé électronique (30) est dans l'habitacle de véhicule si le signal de code d'identification provenant de la clé électronique (30) est reçu ;
l'interdiction du verrouillage des portes, même si l'ouverture de l'une des portes n'est pas détectée pendant la première durée prédéterminée, s'il est déterminé que la clé électronique (30) est dans l'habitacle de véhicule ; le procédé de commande de verrouillage étant **caractérisé en ce qu'**il comprend :
la détection d'un dysfonctionnement dans le moyen de détection d'ouverture/fermeture (16) et l'enregistrement d'informations spécifiant le dysfonctionnement dans le moyen de détection d'ouverture/fermeture (16) lorsqu'il est déterminé que la clé électronique est dans l'habitacle de véhicule.

9. Procédé de commande de verrouillage pour un système d'entrée sans clé (200) qui a un système de verrouillage de porte de véhicule (100), qui comporte un moyen de détection d'ouverture/fermeture (16) pour détecter l'ouverture/fermeture des portes de véhicule individuellement ; un moyen de communication (12, 13) pour envoyer un signal de demande afin de demander à une clé électronique (30) équipée d'une unité de communication radio d'envoyer un signal de code d'identification stocké et pour recevoir le signal de code d'identification envoyé par la clé électronique (30) ; un moyen d'authentification (11) pour authentifier la clé électronique (30) à travers le signal de code d'identification ; un moyen de déverrouillage (33, 15) pour déverrouiller les portes lorsque la clé électronique (30) est authentifiée ; et un moyen de verrouillage de porte (32, 15) pour verrouiller les portes de véhicule si l'ouverture d'une porte quelconque de véhicule n'est pas détectée pendant une première durée prédéterminée après que les portes ont été déverrouillées par le moyen de déverrouillage (33, 15), et la clé électronique (30), qui envoie le signal de code d'identification stocké lorsqu'un signal de demande permettant de demander d'envoyer le signal de code d'identification est reçu, le procédé de commande de verrouillage comprenant :
l'envoi d'un signal de demande à l'intérieur du véhicule pour demander à la clé électronique (30) d'envoyer le signal de code d'identification si l'ouverture de l'une des portes n'est pas détectée pendant la première durée prédéterminée ;
l'envoi du signal de code d'identification stocké par la clé électronique (30) en réponse à un signal de demande pour demander d'envoyer le signal de code d'identification ;
la détermination du fait que la clé électronique (30) est dans l'habitacle de véhicule si le signal de code d'identification provenant de la clé électronique (30) est reçu ;
l'interdiction du verrouillage des portes, même si l'ouverture de l'une des portes n'est pas détectée dans la première durée prédéterminée, s'il est déterminé que la clé électronique (30) est dans l'habitacle de véhicule ; le procédé de commande de verrouillage étant **caractérisé en ce qu'**il comprend :
la détection d'un dysfonctionnement dans le moyen de détection d'ouverture/fermeture (16) et l'enregistrement d'informations spécifiant le dysfonctionnement dans le moyen de détection d'ouverture/fermeture (16) lorsqu'il est déterminé que la clé électronique est dans l'habitacle de véhicule.
